# EUROPEAN PATENT APPLICATION

(11) **EP 4 429 330 A1**
(43) Date of publication of application: **11.09.2024**
(21) Application number: 21962979.7
(22) Date of filing: 05.11.2021
(51) Int. Cl.: H04W 52/02, H04W 72/04

(54) **BWP FALLBACK METHOD AND APPARATUS, DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2021/129121
(87) International publication number: WO 2023/077466

(57) **Abstract**

The present application relates to the field of mobile communications, and discloses a BWP fallback method and apparatus, a device, and a storage medium. The method comprises: a terminal responds to timeout of a first timer of the currently monitored BWP, and a first-type terminal determines a default BWP, wherein the default BWP is a target BWP to which the terminal is switched from the currently monitored BWP, and the default BWP is determined according to at least one of the following modes: a preset rule, the indication information of a network device, and a communication protocol. The present application solves the problem that the terminal cannot determine the default BWP on the basis of a downlink BWP so as to complete fallback, improves the accuracy of determining the default BWP, thereby further improving the efficiency of terminal fallback.

## Description

### TECHNICAL FIELD

The disclosure relates to the field of mobile communications, in particular to a bandwidth part (BWP) fallback method, a BWP fallback apparatus, a device and a storage medium.

### BACKGROUND

In a new radio (NR) system, a timer can be configured for one serving cell. If a terminal switches to a certain bandwidth part (BWP) and does not detect a physical downlink control channel (PDCCH) on the BWP within a specified time period, it will have to switch to a default BWP.

However, if a downlink BWP is configured separately for the terminal, multiple downlink BWPs may be included, and the terminal cannot determine the default BWP based on the downlink BWPs to complete fallback. Therefore, how the terminal falls back to the default BWP is a problem that needs to be solved urgently.

### SUMMARY

Embodiments of the disclosure provide a bandwidth part (BWP) fallback method, a BWP fallback apparatus, a device and a storage medium, to solve a problem that a terminal might not be able to determine a default BWP based on a downlink BWP to complete fallback, which improves an accuracy of determining the default BWP and improves a fallback efficiency of the terminal. The technical solutions are provided as follows.

According to a first aspect of the disclosure, a BWP fallback method is provided. The BWP fallback method is executed by a first type of terminal. The method includes:
in response to a first timer associated with a BWP that is currently monitored being expired, determining, by the first type of terminal, a default BWP;
in which the default BWP is a target BWP to which the terminal switches from the BWP that is currently monitored, and the default BWP is determined based on at least one of:
a preset rule,
indication information of a network device, or
a communication protocol.

According to a second aspect of the disclosure, a BWP fallback method is provided. The BWP fallback method is executed by a network device. The method includes:
in response to a timer corresponding to a first type of terminal being expired, determining, by the network device, a default BWP for communicating with the first type of terminal, and the default BWP being a target BWP to which the network device switches from a current BWP;
in which the default BWP is determined based on at least one of:
a preset rule, or
a communication protocol.

According to a third aspect of the disclosure, a BWP fallback apparatus is provided. The apparatus includes:
a determining module, configured to, in response to a first timer associated with a BWP that is currently monitored being expired, determine, by a first type of terminal, a default BWP;
in which the default BWP is a target BWP to which the terminal switches from the BWP that is currently monitored, and the default BWP is determined based on at least one of:
a preset rule,
indication information of a network device, or
a communication protocol.

According to a fourth aspect of the disclosure, a BWP fallback apparatus is provided. The apparatus includes:
a determining module, configured to, in response to a timer corresponding to a first type of terminal being expired, determine, by a network device, a default BWP for communicating with the first type of terminal, and the default BWP being a target BWP to which the network device switches from a current BWP;
in which the default BWP is determined based on at least one of:
a preset rule, or
a communication protocol.

According to a fifth aspect of the disclosure, a terminal is provided. The terminal includes: a processor, a transceiver coupled to the processor, and a memory for storing executable instructions of the processor. The processor is configured to load and execute the executable instructions to implement the above BWP fallback methods.

According to a sixth aspect of the disclosure, a network device is provided. The network device includes: a processor, a transceiver coupled to the processor, and a memory for storing executable instructions of the processor. The processor is configured to load and execute the executable instructions to implement the above BWP fallback methods.

According to a seventh aspect of the disclosure, a computer-readable storage medium having executable program codes stored thereon is provided. When the executable program codes are loaded and executed by a processor, the above BWP fallback methods are implemented.

According to an eighth aspect of the disclosure, a chip is provided. The chip includes a programmable logic circuit and/or program instructions. When the chip is running on a terminal or a network device, the above BWP fallback methods can be implemented.

According to a ninth aspect of the disclosure, the embodiment of the disclosure provides a computer program product. When the computer program product is executed by a processor of a terminal or a network device, the above BWP fallback methods can be implemented.

The technical solutions provided by the embodiments of the disclosure include at least the following beneficial effects.

According to a BWP fallback method, a BWP fallback apparatus, a device and a storage medium provided in the embodiments of the disclosure, in response to the first timer associated with the BWP that is currently monitored being expired, the terminal determines the default BWP according to at least one of the preset rule, the indication information of the network device and the communication protocol, and then switches from the BWP that is currently monitored to the default BWP, to solve a problem that the terminal might not be able to determine the default BWP based on the downlink BWP to complete fallback, which improves an accuracy of determining the default BWP and improves the fallback efficiency of the terminal.

### BRIEF DESCRIPTION OF THE DRAWINGS

In order to more clearly illustrate the technical solutions in the embodiments of the disclosure, the drawings required for use in the description of the embodiments will be briefly introduced below. Obviously, the drawings described below are only some embodiments of the disclosure. For those skilled in the art, other drawings can be obtained according to these drawings without inventive work.
FIG. 1 is a schematic diagram of a communication system provided by an embodiment of the disclosure.
FIG. 2 is a flowchart of a bandwidth part (BWP) fallback method provided by an embodiment of the disclosure.
FIG. 3 is a flowchart of a BWP fallback method provided by an embodiment of the disclosure.
FIG. 4 is a block diagram of a BWP fallback apparatus provided by an embodiment of the disclosure.
FIG. 5 is a block diagram of a BWP fallback apparatus provided by an embodiment of the disclosure.
FIG. 6 is a schematic diagram of a communication device provided by an embodiment of the disclosure.

### DETAILED DESCRIPTION

In order to make the purpose, technical solutions and advantages of the disclosure more clear, the implementations of the disclosure are further described in detail below with reference to the accompanying drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The application scenarios of the disclosure are described below.

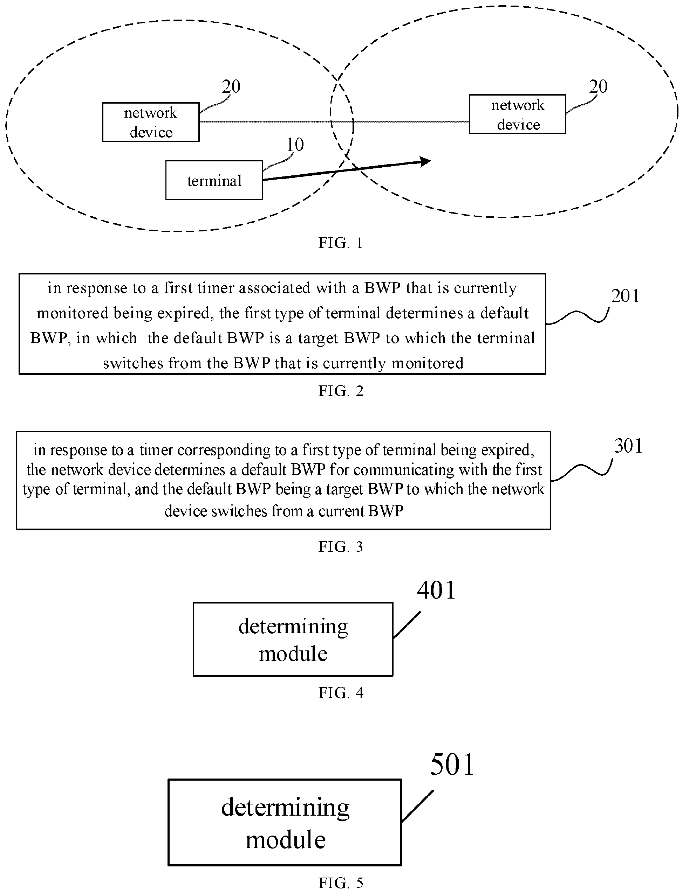

FIG. 1 is a schematic diagram of a communication system provided by an embodiment of the disclosure. The communication system may include: a terminal 10 and a network device 20.

Generally, there may be a plurality of terminals 10, and one or more terminals 10 may be distributed in the cells managed by each network device 20. The terminal 10 may include various handheld devices with wireless communication functions, vehicle-mounted devices, wearable devices, computing devices or other processing devices connected to a wireless modem, as well as various forms of user equipment (UE) and mobile station (MS), etc. For the convenience of description, in the embodiments of the disclosure, the above-mentioned devices are collectively referred to as a terminal.

The network device 20 is a device deployed in an access network to provide wireless communication capabilities for the terminal 10. The network device 20 may include various forms of macro base stations, micro base stations, relay stations, and access points. In systems using different wireless access technologies, the names of devices with the capabilities of the network device may be different. For example, in a 5G new radio (NR) system, it is called a gNB (which is short for gnodeB). As communication technology evolves, the name "network device" may change. For the convenience of description, in the embodiments of the disclosure, the above-mentioned devices that provide wireless communication functions for the terminal 10 are collectively referred to as a network device. A connection may be established between the network device 20 and the terminal 10 via an air interface, to realize communication between each other, such as interaction of signaling and data. There may be multiple network devices 20, and two adjacent network devices 20 may communicate with each other in a wired or wireless manner. The terminal 10 can switch between different network devices 20 and establishes connections with different network devices 20.

The "5G NR system" in the embodiments of the disclosure may also be referred to as a 5G system or an NR system, which is understandable by those skilled in the art. The technical solutions described in the embodiments of the disclosure can be applied to the 5G NR system and other future evolved systems of the 5G NR system.

With the development of communication technologies, in order to adapt to new communication scenarios, the related art has introduced a reduced capability (RedCap) terminal, which is also known as an NR-lite. In general, this type of terminal meet conditions of having low cost and low complexity, providing a certain degree of enhanced coverage and having the characteristic of power saving. Compared to the RedCap terminal, the common terminal is called a non-RedCap terminal or a legacy UE, which is somewhat different from the RedCap terminal.

FIG. 2 is a flowchart of a bandwidth part (BWP) fallback method provided by an embodiment of the disclosure, which can be applied to a first type of terminal as shown in FIG. 1. The method includes at least part of the following contents.

At step 201, in response to a first timer associated with a BWP that is currently monitored being expired, the first type of terminal determines a default BWP, in which the default BWP is a target BWP to which the terminal switches from the BWP that is currently monitored.

The BWP is a bandwidth configured by the network device for the first type of terminal. The terminal monitors the BWP to receive a downlink transmission (e.g., a physical downlink control channel (PDCCH), a physical downlink shared channel (PDSCH), or a Broadcast Channel (BCH)) sent by the network device based on the BWP. The downlink transmission may include a downlink control signaling and/or downlink user data. Moreover, the first timer is used for timing. If a duration in which the first type of terminal monitors and determines that no downlink transmission has been received on the BWP is longer than a set time period of the first timer, the first timer is expired. In response to the first timer being expired, the first type of terminal needs to switch to another BWP from the monitored BWP.

In an embodiment of the disclosure, after the terminal switches to another BWP, it detects the downlink transmission on the BWP. If the first timer associated with the BWP that is currently monitored is expired, it means that the first type of terminal does not receive no downlink transmission on the BWP within the set time period of the first timer, and the first type of terminal determines to switch from the BWP that is currently monitored to a default BWP.

When the first type of terminal determines that the first timer corresponding to the BWP that is currently monitored is expired, it determines a target BWP to be switched (which may be the default BWP) and then switches from the BWP that is currently monitored to the determined default BWP.

The default BWP is determined according to at least one of indication information of a network device, a preset rule, or a communication protocol.

The preset rule is used for the terminal to determine the default BWP from the BWP pre-configured by the network device and the BWP configured separately for the terminal. The indication information of the network device is used to indicate the default BWP, or to indicate a BWP as the default BWP.

In the embodiment of the disclosure, the first type of terminal may be a RedCap UE.

In some embodiments, the first timer is a BWP-InactivityTimer or any other appropriate timer.

It should be noted that, in the embodiment of the disclosure, the first type of terminal refers to a certain type of terminals, the number of which may be one or two or more. Similarly, a second type of terminal also refers to one type of terminals, the number of which may also be one or two or more.

According to the method provided in the embodiment of the disclosure, in response to the first timer associated with the BWP that is currently monitored being expired, the terminal determines the default BWP according to at least one of the preset rule, the indication information of the network device and the communication protocol, and then switches from the BWP that is currently monitored to the default BWP, to solve the problem that the first type of terminal might not be able to determine the default BWP based on the downlink BWP to complete fallback, which improves the accuracy of determining the default BWP and improves the fallback efficiency of the terminal.

The embodiment shown in FIG. 2 illustrates how the terminal switches to the default BWP. For the network device, the network device also determines, according to whether the first timer is expired, the default BWP to which the terminal needs to switch. Detailed description is shown in the embodiment of FIG. 3.

At step 301, in response to a timer corresponding to a first type of terminal being expired, the network device determines a default BWP for communicating with the first type of terminal, and the default BWP being a target BWP to which the network device switches from a current BWP.

The default BWP may be determined, for example, according to at least one of a preset rule or a communication protocol.

For example, the preset rule may be that the network device determines that the first timer for the first type of terminal to detect no downlink transmission on the corresponding BWP is expired. The downlink transmission may include a downlink control signaling and/or downlink user data.

In a possible implementation, the network device may maintain a timer corresponding to the first type of terminal. If the network device does not send a downlink transmission to the first type of terminal within a set time period of the maintained timer, it means that the timer maintained by the network device is expired. In response to the timer being expired, the network device determines the default BWP corresponding to the first type of terminal and then switches from the current BWP to the determined default BWP. In a possible implementation, the timer corresponding to the network device might be different from the first timer corresponding to the first type of terminal, but the timer corresponding to the network device and the first timer corresponding to the first type of terminal have corresponding set time periods.

The manner in which the network device determines to switch to the default BWP in the embodiment of the disclosure is similar to the manner in the embodiment shown in FIG. 2 above, and will not be described in detail here.

In some embodiments, the timer may be a BWP-InactivityTimer or any other appropriate timer.

According to the method provided in the embodiment of the disclosure, the network device determines the default BWP when it determines that the timer corresponding to the first type of terminal is expired, and then switches from the BWP that is currently monitored to the default BWP. The network device and the first type of terminal can determine the default BWP respectively, to ensure that the default BWP corresponds to the first type of terminal, so that the problem that the default BWP might not be determined based on the downlink BWP to complete fallback may be solved, thereby improving the accuracy of determining the default BWP, and improving the fallback efficiency of the terminal.

The information included in the preset rule is described based on the embodiments shown in FIG. 2 and FIG. 3. The preset rule includes at least one of the following information.

### (1) A relation between a first uplink BWP and a bandwidth supported by the first type of terminal

The first uplink BWP is a BWP configured by the network device for the first type of terminal. The bandwidth supported by the first type of terminal is the maximum bandwidth supported by the first type of terminal.

The relation between the first uplink BWP and the bandwidth supported by the first type of terminal includes that the first uplink BWP is less than the bandwidth supported by the first type of terminal, the first uplink BWP is greater than the bandwidth supported by the first type of terminal, or the first uplink BWP is equal to the bandwidth supported by the first type of terminal.

### (2) A relation between a first downlink BWP and the bandwidth supported by the first type of terminal

The first downlink BWP is a BWP configured by the network device for the first type of terminal. The bandwidth supported by the first type of terminal is the maximum bandwidth supported by the first type of terminal.

The relation between the first downlink BWP and the bandwidth supported by the first type of terminal includes that the first downlink BWP is less than the bandwidth supported by the first type of terminal, the first downlink BWP is greater than the bandwidth supported by the first type of terminal, or the first downlink BWP is equal to the bandwidth supported by the first type of terminal.

### (3) A function of a second downlink BWP.

The second downlink BWP may be used for at least one of: random access, paging, or a connected state.

The first type of terminal and a second type of terminal are supported to use the first downlink BWP. The first type of terminal is supported to use the second downlink BWP, i.e., only the first type of terminal is supported to use the second downlink BWP, but the second type of terminal is not supported to use the second downlink BWP. The first type of terminal and the second type of terminal belong to different types, and a capability of the first type of terminal is less than that of the second type of terminal.

In some possible implementations, the first type of terminal may be referred to as a RedCap terminal or an NR-lite. The second type of terminal may be a legacy UE.

In some embodiments, the first type of terminal is applicable to an Internet of Things (IoT) service. Due to the wide-ranging development of services such as video monitoring, smart homes, wearable devices and industrial sensors, the IoT service requires a transmission rate of tens to hundreds of megabits, and thus the first type of terminal is introduced to adapt to the IoT service.

The first type of terminal provided in the embodiment of the disclosure has a simple structure and low design complexity, which not only satisfies the requirement of covering IoT devices, but also reduces the design requirements of the terminal, thereby improving the adaptability of the terminal.

It should be noted that the above-mentioned embodiments can be split into new embodiments or combined with other embodiments as new embodiments, which is not limited in the disclosure.

In the embodiment of FIG. 2 or FIG. 3, the default BWP may include the following types.

The first type, the default BWP is a default BWP configured by the network device through a terminal-specific signaling.

The network device configures the default BWP for the terminal through a terminal-specific signaling, and the terminal can determine the default BWP configured by the network device as the default BWP to be switched. In all the embodiments of the disclosure, the "terminal-specific signaling" is a signaling sent to the first type of terminal, which can be a signaling specific to the first type of terminal, or may be a field, an information element (IE), or one or more bits dedicated to configuring the RedCap terminal in an existing signaling.

The second type, the default BWP is a first downlink BWP configured by a System Info Block (SIB) in case that the network device does not configure the default BWP through a terminal-specific signaling.

In the embodiment of the disclosure, in the case where the network device does not configure the default BWP via a terminal-specific signaling, the first type of terminal includes a first downlink BWP configured by the SIB, the first type of terminal may determine the first downlink BWP configured by the SIB as the default BWP.

The third type, the default BWP is a first downlink BWP configured by a Master Indication Block (MIB) in case that the network device does not configure the default BWP through a terminal-specific signaling.

In the embodiment of the disclosure, in the case where the network device does not configure the default BWP via a terminal-specific signaling, the first type of terminal includes a first downlink BWP configured by the MIB, the first type of terminal may determine the first downlink BWP configured by the MIB as the default BWP.

The fourth type, the default BWP is a second downlink BWP in case that the network device does not configure the default BWP through a terminal-specific signaling.

In the embodiment of the disclosure, the first type of terminal is configured with a second downlink BWP, which is applicable to the first type of terminal. In case that the network device does not configure the default BWP through a terminal-specific signaling, the first type of terminal may determine the second downlink BWP as the default BWP. In a possible implementation, the second downlink BWP is a BWP dedicated to the first type of terminal, and the second type of terminal cannot use the second downlink BWP.

The fifth type, the default BWP is a common BWP configured by the network device in case that the network device does not configure the default BWP through a terminal-specific signaling.

In the embodiment of the disclosure, the network device can configure a common BWP for the first type of terminal. That is, all the first type of terminals can use this common BWP, and a default BWP will not be configured for the first type of terminal. When the terminal needs to switch to the default BWP, the common BWP configured by the network device is determined as the default BWP.

The sixth type, the default BWP is a BWP indicated by configuration information of the network device, which is any one of a second downlink BWP, a first downlink BWP configured by the SIB, or a first downlink BWP configured by the MIB.

In some embodiments, in case that the first downlink BWP is less than the bandwidth supported by the first type of terminal, the first uplink BWP is less than the bandwidth supported by the first type of terminal, and the second downlink BWP is at least used in a connected state, the BWP indicated by the configuration information of the network device is determined as the default BWP.

In the method provided in the embodiment of the disclosure, when the network device does not configure a default BWP for the first type of terminal through a terminal-specific signaling, any one of a second downlink BWP, a first downlink BWP configured by the SIB, and a first downlink BWP configured by the MIB can be indicated as the default BWP through indication information of the network device, which improves the accuracy of determining the default BWP and improves the fallback efficiency of the terminal.

It should be noted that the above-mentioned embodiments can be split into new embodiments, or combined with other embodiments as new embodiments, which is not limited in the disclosure.

On the premise that the default BWP includes the above six types, the conditions for each type are described. Certainly, these types are not exhaustive, and those skilled in the art can make adaptive adjustments according to the technical solutions disclosed in the disclosure.

The first type in the above embodiment is illustrated below.
(1) In case that the first downlink BWP is less than the bandwidth supported by the first type of terminal, the first uplink BWP is greater than the bandwidth supported by the first type of terminal, and the second downlink BWP is at least used for random access or paging, the default BWP is a default BWP configured by the network device through a terminal-specific signaling.
   If the network device configures a default BWP through a terminal-specific signaling, in the case where the first downlink BWP is less than the bandwidth supported by the first type of terminal, the first uplink BWP is greater than the bandwidth supported by the first type of terminal, and the second downlink BWP is at least used for random access or paging, the default BWP configured by the network device can be determined as the default BWP that the first type of terminal needs to switch to.
(2) In case that the first downlink BWP configured by the SIB is greater than the bandwidth supported by the first type of terminal, the first uplink BWP is less than the bandwidth supported by the first type of terminal, and the second downlink BWP is at least used for random access or paging, the default BWP is a default BWP configured by the network device through a terminal-specific signaling.
   If the network device configures a default BWP through a terminal-specific signaling, in the case where the first downlink BWP configured by the SIB is greater than the bandwidth supported by the first type of terminal, the first uplink BWP is less than the bandwidth supported by the first type of terminal, and the second downlink BWP is at least used for random access or paging, the default BWP configured by the network device can be determined as the default BWP that the first type of terminal needs to switch to.
(3) In case that the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP is a default BWP configured by the network device through a terminal-specific signaling.

If the network device configures a default BWP through a terminal-specific signaling, in the case where the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP configured by the network device can be determined as the default BWP that the first type of terminal needs to switch to.

It should be noted that the above-mentioned embodiments can be split into new embodiments, or combined with other embodiments as new embodiment, which is not limited in the disclosure.

According to the method provided in the embodiment of the disclosure, the network device configures a default BWP for the first type of terminal. When the terminal determines that the first uplink BWP, the first downlink BWP and the bandwidth supported by the first type of terminal satisfy the conditions, and the second downlink BWP is used for random access or paging, the default BWP configured by the network device can be determined as the default BWP that the first type of terminal needs to switch to, which improves the accuracy of determining the default BWP and improves the fallback efficiency of the terminal.

On the premise that the default BWP includes the above six types, the conditions for each type are explained.

Explanations are provided for the second and third types in the above embodiments.
(1) In case that the first downlink BWP is less than the bandwidth supported by the first type of terminal, the first uplink BWP is less than the bandwidth supported by the first type of terminal, and the second downlink BWP is at least used for random access or paging, the default BWP is the first downlink BWP configured by the SIB or the first downlink BWP configured by the MIB.
   In an embodiment of the disclosure, if the network device does not configure a default BWP for the first type of terminal through a terminal-specific signaling, in the case where it is determined that the first downlink BWP is less than the bandwidth supported by the first type of terminal, the first uplink BWP is less than the bandwidth supported by the first type of terminal, and the second downlink BWP is at least used for random access or paging, the first downlink BWP configured by the SIB or the first downlink BWP configured by the MIB is determined as the default BWP.
(2) In case that the first downlink BWP is less than the bandwidth supported by the first type of terminal, the first uplink BWP is greater than the bandwidth supported by the first type of terminal, and the second downlink BWP is at least used for random access or paging, the default BWP is the first downlink BWP configured by the SIB or the first downlink BWP configured by the MIB.

In an embodiment of the disclosure, if the network device does not configure a default BWP for the first type of terminal through a terminal-specific signaling, in the case where it is determined that the first downlink BWP is less than the bandwidth supported by the first type of terminal, the first uplink BWP is greater than the bandwidth supported by the first type of terminal, and the second downlink BWP is at least used for random access or paging, the first downlink BWP configured by the SIB or the first downlink BWP configured by the MIB is determined as the default BWP.

In some embodiments, in the case where the first downlink BWP is less than the bandwidth supported by the first type of terminal, the first uplink BWP is greater than the bandwidth supported by the first type of terminal, and the second downlink BWP is used at least for random access or paging, for a frequency division duplex (FDD) mode, the default BWP is the first downlink BWP configured by the SIB or the first downlink BWP configured by the MIB.

In other embodiments, in the case where the first downlink BWP is less than the bandwidth supported by the first type of terminal, the first uplink BWP is greater than the bandwidth supported by the first type of terminal, and the second downlink BWP is used at least for random access or paging, for a time division duplex (TDD) mode, the default BWP is the first downlink BWP configured by the SIB or the first downlink BWP configured by the MIB, and an uplink BWP corresponding to the first downlink BWP is configured.

In the embodiment of the disclosure, according to the frequency division duplex mode or the time division duplex mode, it is considered whether the first type of terminal is configured with an uplink BWP corresponding to the first downlink BWP. While ensuring that the default BWP is determined, the uplink BWP is configured to ensure uplink transmission, thereby improving the accuracy of transmission.

(3) In case that the first downlink BWP is less than the bandwidth supported by the first type of terminal, the first uplink BWP is less than the bandwidth supported by the first type of terminal, and the second downlink BWP is at least used in a connected state, the default BWP is the first downlink BWP configured by the SIB or the first downlink BWP configured by the MIB.

In the embodiment of the disclosure, if the network device does not configure a default BWP for the first type of terminal through a terminal-specific signaling, and in the case where it is determined that the first downlink BWP is less than the bandwidth supported by the first type of terminal, the first uplink BWP is less than the bandwidth supported by the first type of terminal, and the second downlink BWP is at least used in the connected state, the first downlink BWP configured by the SIB or the first downlink BWP configured by the MIB is determined as the default BWP.

According to the method provided in the embodiment of the disclosure, if the network device does not configure a default BWP for the first type of terminal through a terminal-specific signaling, in the case where the terminal determines that the first uplink BWP, the first downlink BWP and the bandwidth supported by the first type of terminal satisfy the conditions, and the second downlink BWP is at least used for random access or paging or a connected state, the first downlink BWP configured by the SIB or the first downlink BWP configured by the MIB can be determined as the default BWP, which improves the accuracy of determining the default BWP and improves the fallback efficiency of the terminal.

It should be noted that the above-mentioned embodiments can be split into new embodiments, or combined with other embodiments as new embodiments, which is not limited in the disclosure.

On the premise that the default BWP includes the above six types, the conditions for each type are explained.

Explanations are provided for the third type in the above embodiments.
(1) In case that the first downlink BWP configured by the SIB is greater than the bandwidth supported by the first type of terminal, the first uplink BWP is less than the bandwidth supported by the first type of terminal, and the second downlink BWP is at least used for random access or paging, the default BWP is the first downlink BWP configured by the MIB.
   In an embodiment of the disclosure, if the network device does not configure a default BWP for the first type of terminal through a terminal-specific signaling, and in the case where it is determined that the first downlink BWP configured by the SIB is greater than the bandwidth supported by the first type of terminal, the first uplink BWP is less than the bandwidth supported by the first type of terminal, and the second downlink BWP is at least used for random access or paging, the first downlink BWP configured by the SIB or the first downlink BWP configured by the MIB is determined as the default BWP.
(2) In case that the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP is the first downlink BWP configured by the MIB.

In an embodiment of the disclosure, if the network device does not configure a default BWP for the first type of terminal through a terminal-specific signaling, and in the case where it is determined that the first downlink BWP configured by the SIB is greater than the bandwidth supported by the first type of terminal, the first uplink BWP is greater than the bandwidth supported by the first type of terminal, and the second downlink BWP is at least used for random access or paging, the first downlink BWP configured by the SIB or the first downlink BWP configured by the MIB is determined as the default BWP.

In some embodiments, in the case where the first downlink BWP configured by the SIB is greater than the bandwidth supported by the first type of terminal, the first uplink BWP is greater than the bandwidth supported by the first type of terminal, and the second downlink BWP is at least used for random access or paging, for a frequency division duplex mode, the default BWP is the first downlink BWP configured by the MIB.

In some embodiments, in the case where the first downlink BWP configured by the SIB is greater than the bandwidth supported by the first type of terminal, the first uplink BWP is greater than the bandwidth supported by the first type of terminal, and the second downlink BWP is used at least for random access or paging, for a time division duplex mode, the default BWP is the first downlink BWP configured by the MIB, and an uplink BWP corresponding to the first downlink BWP is configured.

In the embodiment of the disclosure, according to the frequency division duplex mode or the time division duplex mode, it is considered whether the first type of terminal is configured with an uplink BWP corresponding to the first downlink BWP. While ensuring that the default BWP is determined, the uplink BWP is configured to ensure uplink transmission, thereby improving the accuracy of transmission.

In the method provided in the embodiment of the disclosure, if the network device does not configure a default BWP for the first type of terminal through a terminal-specific signaling, when the terminal determines that the first uplink BWP, the first downlink BWP and the bandwidth supported by the first type of terminal satisfy the conditions, and the second downlink BWP is used for random access or paging, the first downlink BWP configured by the SIB or the first downlink BWP configured by the MIB can be determined as the default BWP, which improves the accuracy of determining the default BWP and improves the fallback efficiency of the terminal.

It should be noted that the above-mentioned embodiments can be split into new embodiments, or combined with other embodiments as new embodiments, which is not limited in the disclosure.

On the premise that the default BWP includes the above six types, the conditions for each type are explained.

Explanations are provided for the fourth type in the above embodiments.
(1) In case that the first downlink BWP is less than the bandwidth supported by the first type of terminal, the first uplink BWP is less than the bandwidth supported by the first type of terminal, and the second downlink BWP is at least used in a connected state, the default BWP is the second downlink BWP.
   In an embodiment of the disclosure, if the network device does not configure a default BWP for the first type of terminal through a terminal-specific signaling, and in the case where it is determined that the first downlink BWP is less than the bandwidth supported by the first type of terminal, the first uplink BWP is less than the bandwidth supported by the first type of terminal, and the second downlink BWP is at least used in the connected state, the second downlink BWP is determined as the default BWP.
(2) In case that the first downlink BWP is less than the bandwidth supported by the first type of terminal, the first uplink BWP is greater than the bandwidth supported by the first type of terminal, and the second downlink BWP is at least used in a connected state, the default BWP is the second downlink BWP.
   In an embodiment of the disclosure, if the network device does not configure a default BWP for the first type of terminal through a terminal-specific signaling, in the case where it is determined that the first downlink BWP is less than the bandwidth supported by the first type of terminal, the first uplink BWP is greater than the bandwidth supported by the first type of terminal, and the second downlink BWP is at least used in the connected state, the second downlink BWP is determined as the default BWP.
(3) In case that the first downlink BWP configured by the SIB is greater than the bandwidth supported by the first type of terminal, the first uplink BWP is less than the bandwidth supported by the first type of terminal, and the second downlink BWP is at least used in a connected state, the default BWP is the second downlink BWP.
   In an embodiment of the disclosure, if the network device does not configure a default BWP for the first type of terminal through a terminal-specific signaling, in the case where it is determined that the first downlink BWP configured by the SIB is greater than the bandwidth supported by the first type of terminal, the first uplink BWP is less than the bandwidth supported by the first type of terminal, and the second downlink BWP is at least used in the connected state, the second downlink BWP is determined as the default BWP.
(4) In case that the downlink BWP configured by the SIB is greater than the bandwidth supported by the terminal, the uplink BWP is greater than the bandwidth supported by the terminal, and the second downlink BWP is at least used in a connected state, the default BWP is the second downlink BWP.

In an embodiment of the disclosure, if the network device does not configure a default BWP for the first type of terminal through a terminal-specific signaling, in the case where it is determined that the downlink BWP configured by the SIB is greater than the bandwidth supported by the terminal, the uplink BWP is greater than the bandwidth supported by the terminal, and the second downlink BWP is at least used in the connected state, the second downlink BWP is determined as the default BWP.

According to the method provided in the embodiment of the disclosure, if the network device does not configure a default BWP for the first type of terminal through a terminal-specific signaling, when the terminal determines that the first uplink BWP, the first downlink BWP and the bandwidth supported by the first type of terminal satisfy the conditions, and the second downlink BWP is also used in the connected state, the second downlink BWP can be determined as the default BWP, which improves the accuracy of determining the default BWP, and improves the fallback efficiency of the terminal.

It should be noted that the above-mentioned embodiments can be split into new embodiments, or combined with other embodiments as new embodiments, which is not limited in the disclosure.

On the premise that the default BWP includes the above six types, the conditions for each type are explained.

Explanations are provided for the sixth type in the above embodiments.
(1) In case that the first downlink BWP is less than the bandwidth supported by the first type of terminal, the first uplink BWP is greater than the bandwidth supported by the first type of terminal, and the second downlink BWP is used at least for random access or paging, the default BWP is a common BWP configured by the network device.
   In an embodiment of the disclosure, if the network device does not configure a default BWP for the first type of terminal through a terminal-specific signaling, the network device can configure a common BWP for the first type of terminal. In the case where it is determined that the first downlink BWP is less than the bandwidth supported by the first type of terminal, the first uplink BWP is greater than the bandwidth supported by the first type of terminal, and the second downlink BWP is at least used for random access or paging, the common BWP is determined as the default BWP.
(2) In case that the first downlink BWP configured by the SIB is greater than the bandwidth supported by the first type of terminal, the first uplink BWP is less than the bandwidth supported by the first type of terminal, and the second downlink BWP is at least used for random access or paging, the default BWP is a common BWP configured by the network device.
   In an embodiment of the disclosure, if the network device does not configure a default BWP for the first type of terminal through a terminal-specific signaling, the network device can configure a common BWP for the first type of terminal. In the case where it is determined that the first downlink BWP is greater than the bandwidth supported by the first type of terminal, the first uplink BWP is less than the bandwidth supported by the first type of terminal, and the second downlink BWP is at least used for random access or paging, the common BWP is determined as the default BWP.
(3) In case that the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP is a common BWP configured by the network device.

In an embodiment of the disclosure, if the network device does not configure a default BWP for the first type of terminal through a terminal-specific signaling, the network device can configure a common BWP for the first type of terminal. In the case where it is determined that the first downlink BWP is greater than the bandwidth supported by the first type of terminal, the first uplink BWP is greater than the bandwidth supported by the first type of terminal, and the second downlink BWP is at least used for random access or paging, the common BWP is determined as the default BWP.

According to the method provided in the embodiment of the disclosure, if the network device does not configure a default BWP for the first type of terminal through a terminal-specific signaling, but configures a common BWP for the first type of terminal, when the terminal determines that the first uplink BWP, the first downlink BWP and the bandwidth supported by the first type of terminal satisfy the conditions, and the second downlink BWP is used for random access or paging, the common BWP can be determined as the default BWP, which improves the accuracy of determining the default BWP and improves the fallback efficiency of the terminal.

It should be noted that the above-mentioned embodiments can be split into new embodiments, or combined with other embodiments as new embodiments, which is not limited in the disclosure.

FIG. 4 is a block diagram of a BWP fallback apparatus provided by an embodiment of the disclosure. As illustrated in FIG. 4, the apparatus includes:
a determining module 401, configured to, in response to a first timer associated with a BWP that is currently monitored being expired, determine, by the first type of terminal, a default BWP; in which the default BWP is a target BWP to which the terminal switches from the BWP that is currently monitored.

In the embodiment of the disclosure, the apparatus shown in FIG. 4 is applied to a first type of terminal. In some possible embodiments, the first type of terminal may be a RedCap UE.

The default BWP is determined based on at least one of indication information, a preset rule, or a communication protocol.

In some embodiments, the preset rule includes at least one of the following information:
a relation between a first uplink BWP and a bandwidth supported by the first type of terminal, a relation between a first downlink BWP and the bandwidth supported by the first type of terminal, or a function of a second downlink BWP;
in which the first type of terminal and a second type of terminal are supported to use the first downlink BWP, the first type of terminal is supported to use the second downlink BWP, and a capability of the first type of terminal is less than a capability of the second type of terminal.

In some embodiments, the default BWP is a default BWP configured by the network device through a terminal-specific signaling.

In some embodiments, in case that the network device does not configure the default BWP through a terminal-specific signaling, the default BWP is a first downlink BWP configured by an SIB.

In some embodiments, in case that the network device does not configure the default BWP through a terminal-specific signaling, the default BWP is a first downlink BWP configured by an MIB.

In some embodiments, in case that the network device does not configure the default BWP through a terminal-specific signaling, the default BWP is a second downlink BWP.

In some embodiments, in case that the network device does not configure the default BWP through a terminal-specific signaling, the default BWP is a common BWP configured by the network device.

In some embodiments, in case that the first downlink BWP is less than the bandwidth supported by the first type of terminal, the first uplink BWP is greater than the bandwidth supported by the first type of terminal, and the second downlink BWP is at least used for random access or paging, the default BWP is a default BWP configured by the network device through the terminal-specific signaling.

In some embodiments, in case that the first downlink BWP configured by an SIB is greater than the bandwidth supported by the first type of terminal, the first uplink BWP is less than the bandwidth supported by the first type of terminal, and the second downlink BWP is at least used for random access or paging, the default BWP is a default BWP configured by the network device through the terminal-specific signaling.

In some embodiments, in case that the first downlink BWP configured by an SIB is greater than the bandwidth supported by the first type of terminal, the first uplink BWP is greater than the bandwidth supported by the first type of terminal, and the second downlink BWP is at least used for random access or paging, the default BWP is a default BWP configured by the network device through the terminal-specific signaling.

In some embodiments, in case that the first downlink BWP is less than the bandwidth supported by the first type of terminal, the first uplink BWP is less than the bandwidth supported by the first type of terminal, and the second downlink BWP is at least used for random access or paging, the default BWP is the first downlink BWP configured by the SIB or the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is at least used for random access or paging, the default BWP is the first downlink BWP configured by the SIB or the first downlink BWP configured by the MIB.

In some embodiments, in case that the first downlink BWP is less than the bandwidth supported by the first type of terminal, the first uplink BWP is less than the bandwidth supported by the first type of terminal, and the second downlink BWP is at least used in a connected state, the default BWP is the first downlink BWP configured by the SIB or the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is at least used for random access or paging, for a frequency division duplex mode, the default BWP is the first downlink BWP configured by the SIB or the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is used at least for random access or paging, for a time division duplex mode, the default BWP is the first downlink BWP configured by the SIB or the first downlink BWP configured by the MIB, and an uplink BWP corresponding to the first downlink BWP is configured.

In some embodiments, in case that the first downlink BWP configured by the SIB is greater than the bandwidth supported by the first type of terminal, the first uplink BWP is less than the bandwidth supported by the first type of terminal, and the second downlink BWP is at least used for random access or paging, the default BWP is the first downlink BWP configured by the MIB.

In some embodiments, in case that the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP is the first downlink BWP configured by the MIB.

In some embodiments, in case that the first downlink BWP configured by the SIB is greater than the bandwidth supported by the first type of terminal, the first uplink BWP is greater than the bandwidth supported by the first type of terminal, and the second downlink BWP is used for at least random access or paging, for a frequency division duplex mode, the default BWP is the first downlink BWP configured by the MIB.

In some embodiments, in case that the first downlink BWP configured by the SIB is greater than the bandwidth supported by the first type of terminal, the first uplink BWP is greater than the bandwidth supported by the first type of terminal, and the second downlink BWP is used at least for random access or paging, for a time division duplex mode, the default BWP is the first downlink BWP configured by the MIB, and an uplink BWP corresponding to the first downlink BWP is configured.

In some embodiments, in case that the first downlink BWP is less than the bandwidth supported by the first type of terminal, the first uplink BWP is less than the bandwidth supported by the first type of terminal, and the second downlink BWP is at least used in a connected state, the default BWP is the second downlink BWP.

In some embodiments, in case that the first downlink BWP is less than the bandwidth supported by the first type of terminal, the first uplink BWP is greater than the bandwidth supported by the first type of terminal, and the second downlink BWP is at least used in a connected state, the default BWP is the second downlink BWP.

In some embodiments, in case that the first downlink BWP configured by the SIB is greater than the bandwidth supported by the first type of terminal, the first uplink BWP is less than the bandwidth supported by the first type of terminal, and the second downlink BWP is at least used in a connected state, the default BWP is the second downlink BWP.

In some embodiments, in case that the downlink BWP configured by the SIB is greater than the bandwidth supported by the terminal, the uplink BWP is greater than the bandwidth supported by the terminal, and the second downlink BWP is at least used in a connected state, the default BWP is the second downlink BWP.

In some embodiments, the default BWP is a BWP indicated by configuration information of the network device, and the BWP is any one of the second downlink BWP, the first downlink BWP configured by the SIB or the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is used at least for random access or paging, the default BWP is a common BWP configured by the network device.

In some embodiments, in case that the first downlink BWP configured by a SIB is greater than the bandwidth supported by the first type of terminal, the first uplink BWP is less than the bandwidth supported by the first type of terminal, and the second downlink BWP is at least used for random access or paging, the default BWP is a common BWP configured by the network device.

In some embodiments, in case that the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP is a common BWP configured by the network device.

In some embodiments, the first timer is a BWP-InactivityTimer or any other appropriate timer.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 5 is a block diagram of a BWP fallback apparatus provided by an embodiment of the disclosure. As illustrated in FIG. 5, the apparatus includes:
a determining module 501, configured to, in response to a timer corresponding to a first type of terminal being expired, determine, by the network device, a default BWP for communicating with the first type of terminal, and the default BWP being a target BWP to which the network device switches from a current BWP.

In the embodiment of the disclosure, the apparatus shown in FIG. 5 is applied to a network device.

The default BWP is determined based on at least one of a preset rule or a communication protocol.

In some embodiments, the preset rule includes at least one of the following information:
a relation between a first uplink BWP and a bandwidth supported by the first type of terminal, a relation between a first downlink BWP and the bandwidth supported by the first type of terminal, or a function of a second downlink BWP;
in which the first type of terminal and a second type of terminal are supported to use the first downlink BWP, the first type of terminal is supported to use the second downlink BWP, and a capability of the first type of terminal is less than a capability of the second type of terminal.

In some embodiments, the default BWP is a default BWP configured by the network device through a terminal-specific signaling.

In some embodiments, in case that the network device does not configure the default BWP through a terminal-specific signaling, the default BWP is a first downlink BWP configured by an SIB.

In some embodiments, in case that the network device does not configure the default BWP through a terminal-specific signaling, the default BWP is a first downlink BWP configured by an MIB.

In some embodiments, in case that the network device does not configure the default BWP through a terminal-specific signaling, the default BWP is a second downlink BWP.

In some embodiments, in case that the network device does not configure the default BWP through a terminal-specific signaling, the default BWP is a common BWP configured by the network device.

In some embodiments, in case that the first downlink BWP is less than the bandwidth supported by the first type of terminal, the first uplink BWP is greater than the bandwidth supported by the first type of terminal, and the second downlink BWP is at least used for random access or paging, the default BWP is a default BWP configured by the network device through the terminal-specific signaling.

In some embodiments, in case that the first downlink BWP configured by an SIB is greater than the bandwidth supported by the first type of terminal, the first uplink BWP is less than the bandwidth supported by the first type of terminal, and the second downlink BWP is at least used for random access or paging, the default BWP is a default BWP configured by the network device through the terminal-specific signaling.

In some embodiments, in case that the first downlink BWP configured by an SIB is greater than the bandwidth supported by the first type of terminal, the first uplink BWP is greater than the bandwidth supported by the first type of terminal, and the second downlink BWP is at least used for random access or paging, the default BWP is a default BWP configured by the network device through the terminal-specific signaling.

In some embodiments, in case that the first downlink BWP is less than the bandwidth supported by the first type of terminal, the first uplink BWP is less than the bandwidth supported by the first type of terminal, and the second downlink BWP is at least used for random access or paging, the default BWP is the first downlink BWP configured by the SIB or the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is at least used for random access or paging, the default BWP is the first downlink BWP configured by the SIB or the first downlink BWP configured by the MIB.

In some embodiments, in case that the first downlink BWP is less than the bandwidth supported by the first type of terminal, the first uplink BWP is less than the bandwidth supported by the first type of terminal, and the second downlink BWP is at least used in a connected state, the default BWP is the first downlink BWP configured by the SIB or the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is at least used for random access or paging, for a frequency division duplex mode, the default BWP is the first downlink BWP configured by the SIB or the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is used at least for random access or paging, for a time division duplex mode, the default BWP is the first downlink BWP configured by the SIB or the first downlink BWP configured by the MIB, and an uplink BWP corresponding to the first downlink BWP is configured.

In some embodiments, in case that the first downlink BWP configured by the SIB is greater than the bandwidth supported by the first type of terminal, the first uplink BWP is less than the bandwidth supported by the first type of terminal, and the second downlink BWP is at least used for random access or paging, the default BWP is the first downlink BWP configured by the MIB.

In some embodiments, in case that the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP is the first downlink BWP configured by the MIB.

In some embodiments, in case that the first downlink BWP configured by the SIB is greater than the bandwidth supported by the first type of terminal, the first uplink BWP is greater than the bandwidth supported by the first type of terminal, and the second downlink BWP is used for at least random access or paging, for a frequency division duplex mode, the default BWP is the first downlink BWP configured by the MIB.

In some embodiments, in case that the first downlink BWP configured by the SIB is greater than the bandwidth supported by the first type of terminal, the first uplink BWP is greater than the bandwidth supported by the first type of terminal, and the second downlink BWP is used at least for random access or paging, for a time division duplex mode, the default BWP is the first downlink BWP configured by the MIB, and an uplink BWP corresponding to the first downlink BWP is configured.

In some embodiments, in case that the first downlink BWP is less than the bandwidth supported by the first type of terminal, the first uplink BWP is less than the bandwidth supported by the first type of terminal, and the second downlink BWP is at least used in a connected state, the default BWP is the second downlink BWP.

In some embodiments, in case that the first downlink BWP is less than the bandwidth supported by the first type of terminal, the first uplink BWP is greater than the bandwidth supported by the first type of terminal, and the second downlink BWP is at least used in a connected state, the default BWP is the second downlink BWP.

In some embodiments, in case that the first downlink BWP configured by the SIB is greater than the bandwidth supported by the first type of terminal, the first uplink BWP is less than the bandwidth supported by the first type of terminal, and the second downlink BWP is at least used in a connected state, the default BWP is the second downlink BWP.

In some embodiments, in case that the downlink BWP configured by the SIB is greater than the bandwidth supported by the terminal, the uplink BWP is greater than the bandwidth supported by the terminal, and the second downlink BWP is at least used in a connected state, the default BWP is the second downlink BWP.

In some embodiments, the default BWP is a BWP indicated by configuration information of the network device, and the BWP is any one of the second downlink BWP, the first downlink BWP configured by the SIB and the first downlink BWP configured by the MIB.

In some embodiments, in case that the first downlink BWP is less than the bandwidth supported by the first type of terminal, the first uplink BWP is greater than the bandwidth supported by the first type of terminal, and the second downlink BWP is used at least for random access or paging, the default BWP is a common BWP configured by the network device.

In some embodiments, in case that the first downlink BWP configured by the SIB is greater than the bandwidth supported by the first type of terminal, the first uplink BWP is less than the bandwidth supported by the first type of terminal, and the second downlink BWP is at least used for random access or paging, the default BWP is a common BWP configured by the network device.

In some embodiments, in case that the first downlink BWP configured by the SIB is greater than the bandwidth supported by the first type of terminal, the first uplink BWP is greater than the bandwidth supported by the first type of terminal, and the second downlink BWP is at least used for random access or paging, the default BWP is a common BWP configured by the network device.

In some embodiments, the first timer is a BWP-InactivityTimer or any other appropriate timer.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the apparatus can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

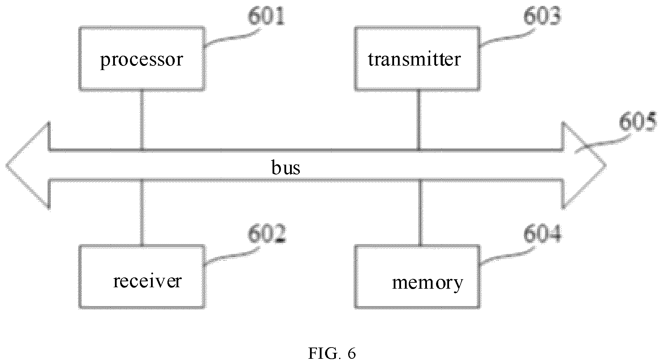

FIG. 6 is a schematic diagram of a communication device provided by an embodiment of the disclosure. The communication device includes: a processor 601, a receiver 602, a transmitter 603, a memory 604 and a bus 605.

The processor 601 includes one or more processing cores, and is able to perform various functional applications as well as information processing by running software programs and modules.

The receiver 602 and the transmitter 603 may be realized as a communication component, which may be a communication chip.

The memory 604 is connected to the processor 601 via a bus 605.

The memory 604 may be used to store at least one program code. The processor 601 is used to execute the at least one program code to implement various steps in the method embodiments described above.

The communication device may be a terminal or a network device. The memory 604 may be implemented by any type of volatile or nonvolatile storage device or a combination thereof. The volatile or nonvolatile storage device includes, but is not limited to, a magnetic disk or optical disk, an electrically erasable programmable read-only memory (EEPROM), an erasable programmable read-only memory (EPROM), a static random access memory (SRAM), a read-only memory (ROM), a magnetic memory, a flash memory, and a programmable ROM (PROM).

In an embodiment, a computer-readable storage medium having executable program codes stored thereon is provided. When the executable program codes are loaded and executed by a processor, the BWP fallback method executed by the communication device provided by each method embodiment is implemented.

In an embodiment, a chip is provided. The chip includes a programmable logic circuit and/or program instructions. When the chip runs on a terminal or a network device, the BWP fallback method provided in each method embodiment is implemented.

In an embodiment, a computer program product is provided. When the computer program product is executed by a processor of a terminal or a network device, the BWP fallback method provided in each method embodiment is implemented.

Those skilled in the art understand that all or some of the steps for realizing the above embodiments may be accomplished by hardware or by a program instructing corresponding hardware. The program may be stored in a computer-readable storage medium, and the storage medium referred to above may be a ROM, a magnetic disk or optical disc.

The foregoing are only optional embodiments of the disclosure and are not intended to limit this disclosure. Any modifications, equivalent substitutions, or improvements made within the spirit and principles of this disclosure shall be included in the scope of protection of this disclosure.

## Claims

1. A bandwidth part (BWP) fallback method, performed by a first type of terminal, comprising:
in response to a first timer associated with a BWP that is currently monitored being expired, determining, by the first type of terminal, a default BWP;
wherein the default BWP is a target BWP to which the terminal switches from the BWP that is currently monitored, and the default BWP is determined based on at least one of:
a preset rule,
indication information of a network device, or
a communication protocol.

2. The method of claim 1, wherein the preset rule comprises at least one of following information:
a relation between a first uplink BWP and a bandwidth supported by the first type of terminal, a relation between a first downlink BWP and the bandwidth supported by the first type of terminal, or a function of a second downlink BWP;
wherein the first type of terminal and a second type of terminal are supported to use the first downlink BWP, the first type of terminal is supported to use the second downlink BWP, and a capability of the first type of terminal is less than a capability of the second type of terminal.

3. The method of claim 1 or 2, wherein the default BWP is a default BWP configured by the network device through a terminal-specific signaling.

4. The method of claim 1 or 2, wherein in case that the network device does not configure the default BWP through a terminal-specific signaling, the default BWP is a first downlink BWP configured by a system information block (SIB); or,
in case that the network device does not configure the default BWP through a terminal-specific signaling, the default BWP is a first downlink BWP configured by a master information block (MIB).

5. The method of claim 1 or 2, wherein in case that the network device does not configure the default BWP through a terminal-specific signaling, the default BWP is a second downlink BWP.

6. The method of claim 1 or 2, wherein in case that the network device does not configure the default BWP through a terminal-specific signaling, the default BWP is a common BWP configured by the network device.

7. The method of claim 1 or 2, wherein the default BWP is a BWP indicated by configuration information of the network device, the BWP is any one of a second downlink BWP, a first downlink BWP configured by an SIB or a first downlink BWP configured by an MIB.

8. The method of claim 3, wherein,
in case that a first downlink BWP is less than a bandwidth supported by the first type of terminal, a first uplink BWP is greater than the bandwidth supported by the first type of terminal, and a second downlink BWP is at least used for random access or paging, the default BWP is a default BWP configured by the network device through the terminal-specific signaling; or,
in case that a first downlink BWP configured by an SIB is greater than a bandwidth supported by the first type of terminal, a first uplink BWP is less than the bandwidth supported by the first type of terminal, and a second downlink BWP is at least used for random access or paging, the default BWP is a default BWP configured by the network device through the terminal-specific signaling; or,
in case that a first downlink BWP configured by an SIB is greater than a bandwidth supported by the first type of terminal, a first uplink BWP is greater than the bandwidth supported by the first type of terminal, and a second downlink BWP is at least used for random access or paging, the default BWP is a default BWP configured by the network device through the terminal-specific signaling.

9. The method of claim 4, wherein,
in case that the first downlink BWP is less than a bandwidth supported by the first type of terminal, a first uplink BWP is less than the bandwidth supported by the first type of terminal, and a second downlink BWP is at least used for random access or paging, the default BWP is the first downlink BWP configured by the SIB or the first downlink BWP configured by the MIB; or,
in case that the first downlink BWP is less than a bandwidth supported by the first type of terminal, a first uplink BWP is greater than the bandwidth supported by the first type of terminal, and a second downlink BWP is at least used for random access or paging, the default BWP is the first downlink BWP configured by the SIB or the first downlink BWP configured by the MIB; or,
in case that the first downlink BWP is less than the bandwidth supported by the first type of terminal, a first uplink BWP is less than the bandwidth supported by the first type of terminal, and a second downlink BWP is at least used in a connected state, the default BWP is the first downlink BWP configured by the SIB or the first downlink BWP configured by the MIB.

10. The method of claim 9, wherein in case that the first downlink BWP is less than the bandwidth supported by the first type of terminal, the first uplink BWP is greater than the bandwidth supported by the first type of terminal, and the second downlink BWP is at least used for random access or paging, for a frequency division duplex (FDD) mode, the default BWP is the first downlink BWP configured by the SIB or the first downlink BWP configured by the MIB; or,
in case that the first downlink BWP is less than the bandwidth supported by the first type of terminal, the first uplink BWP is greater than the bandwidth supported by the first type of terminal, and the second downlink BWP is used at least for random access or paging, for a time division duplex (TDD) mode, the default BWP is the first downlink BWP configured by the SIB or the first downlink BWP configured by the MIB, and an uplink BWP corresponding to the first downlink BWP is configured.

11. The method of claim 4, wherein,
in case that the first downlink BWP configured by the SIB is greater than a bandwidth supported by the first type of terminal, a first uplink BWP is less than the bandwidth supported by the first type of terminal, and a second downlink BWP is at least used for random access or paging, the default BWP is the first downlink BWP configured by the MIB; or,
in case that the first downlink BWP configured by the SIB is greater than a bandwidth supported by the first type of terminal, a first uplink BWP is greater than the bandwidth supported by the first type of terminal, and a second downlink BWP is at least used for random access or paging, the default BWP is the first downlink BWP configured by the MIB.

12. The method of claim 11, wherein,
in case that the first downlink BWP configured by the SIB is greater than the bandwidth supported by the first type of terminal, the first uplink BWP is greater than the bandwidth supported by the first type of terminal, and the second downlink BWP is used for at least random access or paging, for an FDD mode, the default BWP is the first downlink BWP configured by the MIB; or,
in case that the first downlink BWP configured by the SIB is greater than the bandwidth supported by the first type of terminal, the first uplink BWP is greater than the bandwidth supported by the first type of terminal, and the second downlink BWP is used at least for random access or paging, for a TDD mode, the default BWP is the first downlink BWP configured by the MIB, and an uplink BWP corresponding to the first downlink BWP is configured.

13. The method of claim 5, wherein in case that the first downlink BWP is less than a bandwidth supported by the first type of terminal, a first uplink BWP is less than the bandwidth supported by the first type of terminal, and a second downlink BWP is at least used in a connected state, the default BWP is the second downlink BWP; or,
in case that the first downlink BWP is less than a bandwidth supported by the first type of terminal, a first uplink BWP is greater than the bandwidth supported by the first type of terminal, and a second downlink BWP is at least used in a connected state, the default BWP is the second downlink BWP; or,
in case that the first downlink BWP configured by the SIB is greater than a bandwidth supported by the first type of terminal, a first uplink BWP is less than the bandwidth supported by the first type of terminal, and a second downlink BWP is at least used in a connected state, the default BWP is the second downlink BWP; or,
in case that the downlink BWP configured by the SIB is greater than a bandwidth supported by the terminal, an uplink BWP is greater than the bandwidth supported by the terminal, and a second downlink BWP is at least used in a connected state, the default BWP is the second downlink BWP.

14. The method of claim 6, wherein,
in case that the first downlink BWP is less than a bandwidth supported by the first type of terminal, a first uplink BWP is greater than the bandwidth supported by the first type of terminal, and a second downlink BWP is used at least for random access or paging, the default BWP is the common BWP configured by the network device; or,
in case that the first downlink BWP configured by the SIB is greater than a bandwidth supported by the first type of terminal, a first uplink BWP is less than the bandwidth supported by the first type of terminal, and a second downlink BWP is at least used for random access or paging, the default BWP is the common BWP configured by the network device; or,
in case that the first downlink BWP configured by the SIB is greater than a bandwidth supported by the first type of terminal, a first uplink BWP is greater than the bandwidth supported by the first type of terminal, and a second downlink BWP is at least used for random access or paging, the default BWP is the common BWP configured by the network device.

15. A bandwidth part (BWP) fallback method, performed by a network device, comprising:
in response to a timer corresponding to a first type of terminal being expired, determining, by the network device, a default BWP for communicating with the first type of terminal, wherein the default BWP is a target BWP to which the network device switches from a current BWP;
wherein the default BWP is determined based on at least one of:
a preset rule, or
a communication protocol.

16. The method of claim 15, wherein the preset rule comprises at least one of the following information:
a relation between a first uplink BWP and a bandwidth supported by the first type of terminal, a relation between a first downlink BWP and the bandwidth supported by the first type of terminal, or a function of a second downlink BWP;
wherein the first type of terminal and a second type of terminal are supported to use the first downlink BWP, the first type of terminal is supported to use the second downlink BWP, and a capability of the first type of terminal is less than a capability of the second type of terminal.

17. The method of claim 15 or 16, wherein the default BWP is a default BWP configured by the network device through a terminal-specific signaling.

18. The method of claim 15 or 16, wherein in case that the network device does not configure the default BWP through a terminal-specific signaling, the default BWP is a first downlink BWP configured by a system information block (SIB); or,
in case that the network device does not configure the default BWP through a terminal-specific signaling, the default BWP is a first downlink BWP configured by a master information block (MIB).

19. The method of claim 15 or 16, wherein in case that the network device does not configure the default BWP through a terminal-specific signaling, the default BWP is a second downlink BWP.

20. The method of claim 15 or 16, wherein in case that the network device does not configure the default BWP through a terminal-specific signaling, the default BWP is a common BWP configured by the network device.

21. The method of claim 15 or 16, wherein the default BWP is a BWP indicated by configuration information of the network device, the BWP is any one of a second downlink BWP, a first downlink BWP configured by an SIB or a first downlink BWP configured by an MIB.

22. The method of claim 17, wherein,
in case that a first downlink BWP is less than a bandwidth supported by the first type of terminal, a first uplink BWP is greater than the bandwidth supported by the first type of terminal, and a second downlink BWP is at least used for random access or paging, the default BWP is a default BWP configured by the network device through the terminal-specific signaling; or,
in case that a first downlink BWP configured by an SIB is greater than a bandwidth supported by the first type of terminal, a first uplink BWP is less than the bandwidth supported by the first type of terminal, and a second downlink BWP is at least used for random access or paging, the default BWP is a default BWP configured by the network device through the terminal-specific signaling; or,
in case that a first downlink BWP configured by an SIB is greater than a bandwidth supported by the first type of terminal, a first uplink BWP is greater than the bandwidth supported by the first type of terminal, and a second downlink BWP is at least used for random access or paging, the default BWP is a default BWP configured by the network device through the terminal-specific signaling.

23. The method of claim 18, wherein,
in case that the first downlink BWP is less than a bandwidth supported by the first type of terminal, a first uplink BWP is less than the bandwidth supported by the first type of terminal, and a second downlink BWP is at least used for random access or paging, the default BWP is the first downlink BWP configured by the SIB or the first downlink BWP configured by the MIB; or,
in case that the first downlink BWP is less than a bandwidth supported by the first type of terminal, a first uplink BWP is greater than the bandwidth supported by the first type of terminal, and a second downlink BWP is at least used for random access or paging, the default BWP is the first downlink BWP configured by the SIB or the first downlink BWP configured by the MIB; or,
in case that the first downlink BWP is less than a bandwidth supported by the first type of terminal, a first uplink BWP is less than the bandwidth supported by the first type of terminal, and a second downlink BWP is at least used in a connected state, the default BWP is the first downlink BWP configured by the SIB or the first downlink BWP configured by the MIB.

24. The method of claim 23, wherein in case that the first downlink BWP is less than the bandwidth supported by the first type of terminal, the first uplink BWP is greater than the bandwidth supported by the first type of terminal, and the second downlink BWP is at least used for random access or paging, for a frequency division duplex (FDD) mode, the default BWP is the first downlink BWP configured by the SIB or the first downlink BWP configured by the MIB; or,
in case that the first downlink BWP is less than the bandwidth supported by the first type of terminal, the first uplink BWP is greater than the bandwidth supported by the first type of terminal, and the second downlink BWP is used at least for random access or paging, for a time division duplex (TDD) mode, the default BWP is the first downlink BWP configured by the SIB or the first downlink BWP configured by the MIB, and an uplink BWP corresponding to the first downlink BWP is configured.

25. The method of claim 18, wherein,
in case that the first downlink BWP configured by the SIB is greater than a bandwidth supported by the first type of terminal, a first uplink BWP is less than the bandwidth supported by the first type of terminal, and a second downlink BWP is at least used for random access or paging, the default BWP is the first downlink BWP configured by the MIB; or,
in case that the first downlink BWP configured by the SIB is greater than a bandwidth supported by the first type of terminal, a first uplink BWP is greater than the bandwidth supported by the first type of terminal, and a second downlink BWP is at least used for random access or paging, the default BWP the a first downlink BWP configured by the MIB.

26. The method of claim 25, wherein,
in case that the first downlink BWP configured by the SIB is greater than the bandwidth supported by the first type of terminal, the first uplink BWP is greater than the bandwidth supported by the first type of terminal, and the second downlink BWP is used for at least random access or paging, for an FDD mode, the default BWP is the first downlink BWP configured by the MIB; or,
in case that the first downlink BWP configured by the SIB is greater than the bandwidth supported by the first type of terminal, the first uplink BWP is greater than the bandwidth supported by the first type of terminal, and the second downlink BWP is used at least for random access or paging, for a TDD mode, the default BWP is the first downlink BWP configured by the MIB, and an uplink BWP corresponding to the first downlink BWP is configured.

27. The method of claim 19, wherein in case that the first downlink BWP is less than a bandwidth supported by the first type of terminal, a first uplink BWP is less than the bandwidth supported by the first type of terminal, and a second downlink BWP is at least used in a connected state, the default BWP is the second downlink BWP; or,
in case that the first downlink BWP is less than a bandwidth supported by the first type of terminal, a first uplink BWP is greater than the bandwidth supported by the first type of terminal, and a second downlink BWP is at least used in a connected state, the default BWP is the second downlink BWP; or,
in case that the first downlink BWP configured by the SIB is greater than a bandwidth supported by the first type of terminal, a first uplink BWP is less than the bandwidth supported by the first type of terminal, and a second downlink BWP is at least used in a connected state, the default BWP is the second downlink BWP; or,
in case that the downlink BWP configured by the SIB is greater than a bandwidth supported by the terminal, an uplink BWP is greater than the bandwidth supported by the terminal, and a second downlink BWP is at least used in a connected state, the default BWP is the second downlink BWP.

28. The method of claim 20, wherein,
in case that the first downlink BWP is less than a bandwidth supported by the first type of terminal, a first uplink BWP is greater than the bandwidth supported by the first type of terminal, and a second downlink BWP is used at least for random access or paging, the default BWP is the common BWP configured by the network device; or,
in case that the first downlink BWP configured by the SIB is greater than a bandwidth supported by the first type of terminal, a first uplink BWP is less than the bandwidth supported by the first type of terminal, and a second downlink BWP is at least used for random access or paging, the default BWP is the common BWP configured by the network device; or,
in case that the first downlink BWP configured by the SIB is greater than a bandwidth supported by the first type of terminal, a first uplink BWP is greater than the bandwidth supported by the first type of terminal, and a second downlink BWP is at least used for random access or paging, the default BWP is the common BWP configured by the network device.

29. A bandwidth part (BWP) fallback apparatus, comprising:
a determining module, configured to, in response to a first timer associated with a BWP that is currently monitored being expired, determine, by a first type of terminal, a default BWP;
wherein the default BWP is a target BWP to which the terminal switches from the BWP that is currently monitored, and the default BWP is determined based on at least one of:
a preset rule,
indication information of a network device, or
a communication protocol.

30. A bandwidth part (BWP) fallback apparatus, comprising:
a determining module, configured to, in response to a timer corresponding to a first type of terminal being expired, determine, by a network device, a default BWP for communicating with the first type of terminal, wherein the default BWP is a target BWP to which the network device switches from a current BWP;
wherein the default BWP is determined based on at least one of:
a preset rule, or
a communication protocol.

31. A terminal, comprising:
a processor; and
a transceiver coupled to the processor;
wherein the processor is configured to load and execute executable instructions to implement the bandwidth part (BWP) fallback method of any one of claims 1-14.

32. A network device, comprising:
a processor; and
a transceiver coupled to the processor;
wherein the processor is configured to load and execute executable instructions to implement the bandwidth part (BWP) fallback method of any one of claims 15-28.

33. A computer-readable storage medium having executable program codes stored thereon, wherein, when the executable program codes are loaded and executed by a processor, the bandwidth part (BWP) fallback method of any one of claims 1-28 is implemented.

34. A computer program product, wherein when the computer program product is executed by a processor of a terminal or a network device, the bandwidth part (BWP) fallback method of any one of claims 1-28 is implemented.
